# EUROPEAN PATENT APPLICATION

(11) **EP 4 782 560 A1**
(43) Date of publication of application: **29.07.2026**
(21) Application number: 24867838.5
(22) Date of filing: 29.05.2024
(51) Int. Cl.: C22B 7/00, C22B 3/06, C22B 3/44, C22B 15/00, C22B 21/00, C22B 23/00, H01M 10/54

(54) **METHOD FOR RECOVERING METAL**

(30) Priority: 20.09.2023 JP 2023152624
(71) Applicant: JX Metals Circular Solutions Co., Ltd., Tokyo 105-8417 (JP)
(72) Inventor: HIGUCHI,Naoki, Hitachi-shi, Ibaraki 317-0056 (JP)
(74) Representative: Arnold & Siedsma
(86) International application number: PCT/JP2024/019751
(87) International publication number: WO 2025/062751

(57) **Abstract**

A method for recovering metals from battery powder resulting from lithium-ion battery waste, the battery powder containing at least copper, aluminum, and cobalt and/or nickel, the method including: an acid leaching step of leaching the metals in the battery powder into an acidic leaching solution to obtain a metal-containing solution containing at least aluminum ions and cobalt ions and/or nickel ions; and a neutralization step of increasing a pH of the metal-containing solution to precipitate and remove aluminum ions, wherein in the acid leaching step, a plurality of leaching stages are repeated multiple times, the plurality of leaching stages including: a first leaching stage of leaching the metals in the battery powder into an acidic leaching solution, terminating leaching before copper elution, and separating a leached residue to obtain a leached solution; and a second leaching stage of leaching the metals in the leached residue into an acidic leaching solution, and terminating leaching after copper elution to obtain a leached solution, wherein the leached solution obtained in the first leaching stage is used as the metal-containing solution, and the leached solution obtained in the final leaching stage among the plurality of leaching stages is used as the acidic leaching solution in the next first leaching stage, wherein in the acid leaching step, a phosphate ion source and/or a calcium ion source is included in the acidic leaching solution to precipitate aluminum.

## Description

### [Technical Field]

This specification describes a method for recovering metals.

### [Background Art]

In recent years, it has been widely studied for recovery of valuable metals from battery waste such as lithium ion battery waste discarded for expired product life, manufacturing defects or other reasons, in terms of effective utilization of resources.

To recover metals from, for example, lithium ion battery waste, battery powder obtained through heat treatment or other treatments is brought into contact with an acidic leaching solution, thereby leaching metals such as nickel, cobalt, manganese, aluminum, and iron in the battery powder into the acidic leaching solution. This provides a metal-containing solution in which the metals are dissolved.

Each metal is then separated from the metal containing solution. Specifically, as described in, for example, Patent Literatures 1 to 3, aluminum, iron, and manganese among the metals dissolved in the metal-containing solution are sequentially or simultaneously removed by neutralization or solvent extraction. Nickel and cobalt are then separated by solvent extraction, concentrated, and recovered.

With regard to leaching the metals in the battery powder with an acidic leaching solution in such a method for recovering metals, Patent Literature 4 proposes "a method for processing lithium ion batteries, comprising a leaching step of leaching battery powder with a leaching solution containing 0.9 to 1.5 times molar equivalents of sulfuric acid necessary to dissolve all metal components contained in the battery powder, and terminating the leaching before an oxidation-reduction potential (ORP) value (based on silver/silver chloride potential) of the leaching solution exceeds 0 mV". According to this method, it discloses that: "while the valuable metals leached into the leaching solution are sufficiently dissolved, much of the copper can be maintained in a solid state at the end of leaching"; "this makes it possible to easily separate and remove solid copper from the leaching solution, simplifying or omitting the processing required to remove copper dissolved in the leached solution, thereby improving processing efficiency and reducing costs".

### [Citation List]

### [Patent Literature]

[PTL 1] Japanese Patent Application Publication No. 2010-180439 A
[PTL 2] U.S. Patent Application Publication No. 2011/0135547 A1
[PTL 3] Japanese Patent Application Publication No. 2014-162982 A
[PTL 4] Japanese Patent Application Publication No. 2017-36489 A

### [Summary of Invention]

### [Technical Problem]

When copper is left in a solid state at the end of leaching, as described in Patent Literature 4, copper can be easily removed by solid-liquid separation after leaching. However, in this case, leaching is terminated before the copper is dissolved, and thus cobalt and nickel cannot be sufficiently leached. On the other hand, if the leaching time is lengthened for the purpose of increasing the leaching rate of cobalt and nickel, copper will dissolve. Therefore, easy separation and removal of copper cannot be achieved. The method described in Patent Literature 4 has room for further improvement in terms of leaching as much cobalt and nickel as possible while minimizing copper leaching.

By the way, aluminum in battery powder is leached by an acid and exists as aluminum ions in the metal-containing solution. Aluminum ions in the metal-containing solutions can be precipitated and removed by neutralization, but if the concentration of aluminum ions in the metal-containing solution is high, cobalt and nickel ions will also be precipitated if the conditions are such that neutralization precipitates a large number of aluminum ions, resulting in cobalt and nickel losses. Therefore, it is desirable to suppress aluminum leaching during acid leaching.

This specification provides a method for recovering metals that can effectively leach cobalt and/or nickel while suppressing copper leaching during acid leaching, and can suppress the leaching ratio of aluminum.

### [Solution to Problem]

The metal recovering method disclosed in this specification is a method for recovering metals from battery powder resulting from lithium-ion battery waste, the battery powder containing at least copper, aluminum, and cobalt and/or nickel, the method including: an acid leaching step of leaching the metals in the battery powder into an acidic leaching solution to obtain a metal-containing solution containing at least aluminum ions and cobalt ions and/or nickel ions; and a neutralization step of increasing a pH of the metal-containing solution to precipitate and remove aluminum ions, wherein in the acid leaching step, a plurality of leaching stages are repeated multiple times, the plurality of leaching stages including: a first leaching stage of leaching the metals in the battery powder into an acidic leaching solution, terminating leaching before copper elution, and separating a leached residue to obtain a leached solution; and a second leaching stage of leaching the metals in the leached residue into an acidic leaching solution, and terminating leaching after copper elution to obtain a leached solution, wherein the leached solution obtained in the first leaching stage is used as the metal-containing solution, and the leached solution obtained in the final leaching stage among the plurality of leaching stages is used as the acidic leaching solution in the next first leaching stage, wherein in the acid leaching step, a phosphate ion source and/or a calcium ion source is included in the acidic leaching solution to precipitate aluminum.

### [Advantageous Effects of Invention]

According to the above method for recovering metals, it is possible to effectively leach cobalt and/or nickel while suppressing copper leaching during acid leaching, and can suppress the leaching ratio of aluminum.

### [Brief Description of Drawings]

[Fig. 1] Fig. 1 is a flow chart showing an example of a method for recovering metals according to an embodiment.
[Fig. 2] Fig. 2 is a flow chart illustrating an example of a preprocessing step for obtaining battery powder from lithium ion battery waste.
[Fig. 3] Fig. 3 is a flow chart showing details of the acid leaching step included in the metal recovery method of Fig. 1.

### [Description of Embodiments]

Hereinafter, embodiments of the above method for recovering metals will be described in detail.

The method for recovering metals according to an embodiment is a method for recovering metals from battery powder resulting from lithium ion battery waste, which contains at least copper, aluminum and cobalt and/or nickel. The method for recovering metals includes an acid leaching step and a neutralization step.

In the acid leaching step, the metals in the battery powder are leached into an acidic leaching solution to obtain a metal-containing solution containing at least aluminum ions and cobalt ions and/or nickel ions. More specifically, the acid leaching step includes a plurality of leaching stages repeated multiple times. The plurality of leaching stages include a first leaching stage of leaching the metals in the battery powder into an acidic leaching solution, terminating leaching before copper elution, and separating a leached residue to obtain a leached solution, and a second leaching stage of leaching the metals in the leached residue into an acidic leaching solution, and terminating leaching after copper elution to obtain a leached solution. The leached solution obtained in the first leaching stage is then sent to the next step, the neutralization step, as the metal-containing solution. On the other hand, the leached solution obtained in the final leaching stage among the plurality of leaching stages is used as the acidic leaching solution in the next first leaching stage. This suppresses the leaching of copper and sufficiently leaches cobalt and/or nickel to obtain a metal-containing solution that contains substantially no copper ions and cobalt and/or nickel ions.

In the acid leaching step, the acidic leaching solution contains a phosphate ion source and/or a calcium ion source. In this way, the phosphate ion source and/or calcium ion source form compounds with aluminum ions or the like, and aluminum is precipitated. This suppresses the leaching ratio of aluminum during acid leaching. This lowers the concentration of aluminum ions in the metal-containing solution to some extent, so that most of the aluminum is precipitated and can be removed in the neutralization step without significantly increasing the pH of the metal-containing solution. As a result, cobalt and nickel losses in the neutralization step can be effectively suppressed.

In the first leaching stage in which the metal-containing solution is obtained, leaching is terminated before copper is leached, so that the metal-containing solution tends to have a somewhat lower oxidation-reduction potential. Since such a metal-containing solution is subjected to the neutralization step, it is believed that aluminum can be effectively removed even at a relatively low pH in the neutralization step, in combination with the action of the phosphate ion source and/or calcium ion source.

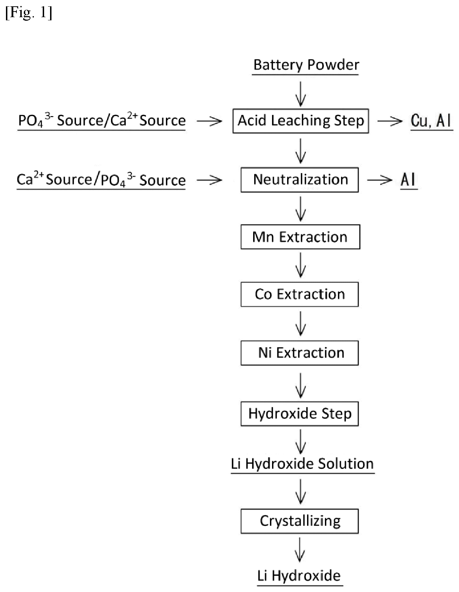

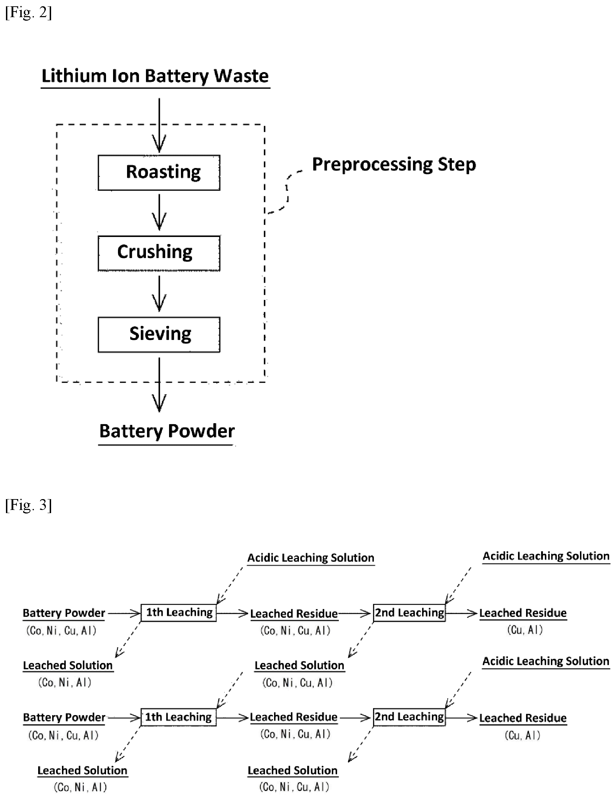

The metal recovery method according to this embodiment may include the steps illustrated in Fig. 1 as an example. In Fig. 1, the battery powder resulting from lithium ion battery waste is subjected to an acid leaching step, a neutralization step, a manganese extraction step, a cobalt extraction step, a nickel extracting step, a hydroxide step, and a crystallizing step in this order. The battery powder can be obtained by subjecting the lithium ion battery waste to the preprocessing step, as illustrated in Fig. 2. Here, the descriptions will be given with reference to Figures 1 and 2, however Figures 1 and 2 are merely examples and are not limited to such specific flows.

### (Lithium Ion Battery Waste)

The lithium ion battery waste of interest refers to lithium ion batteries which can be used in various electronic devices such as mobile phones and which have been discarded due to the end of the battery product's life, manufacturing defects, or other reasons. The recovery of valuable metals from such lithium ion battery waste is preferred in terms of effective utilization of resources.

The lithium ion battery waste has a housing containing aluminum as an exterior that wraps around the lithium ion battery. Examples of the housing include those made only of aluminum and those containing aluminum, iron, aluminum laminate, and the like. The lithium ion battery waste may also contain, in the above housing, cathode active materials composed of single metal oxide containing lithium and one selected from the group consisting of nickel, cobalt and manganese, or a composite metal oxides containing lithium and two or more of those metals, or the like, and aluminum foils (cathode substrates) to which the cathode active materials are applied and fixed by, for example, polyvinylidene fluoride (PVDF) or other organic binders. In addition, the lithium ion battery waste may also contain copper, iron, or the like. Further, the housing of the lithium ion battery waste typically contains an electrolytic solution having an electrolyte such as lithium hexafluorophosphate dissolved in an organic solvent. As the organic solvent, ethylene carbonate, diethyl carbonate or the like may be used, for example.

### (Preprocessing Step)

In many cases, the lithium ion battery waste is subjected to a preprocessing step. The preprocessing step may include at least one of roasting, crushing and sieving. The lithium ion battery waste becomes battery powder through the preprocessing step. The roasting, crushing, and sieving in the preprocessing step may optionally be performed, respectively, or they may be performed in any order. The battery powder means a powder obtained by subjecting the lithium ion battery waste to any preprocessing to concentrate cathode material components. The battery powder may be obtained as a powder by crushing and sieving the lithium ion battery waste with or without a heat treatment to concentrate the cathode material components.

In the roasting, the above lithium ion battery waste is heated. When the roasting is carried out, metals such as lithium and cobalt contained in the lithium ion battery waste may be changed to a form that can easily be dissolved in the acidic leaching solution in the acid leaching step. During the roasting, the lithium ion battery waste is preferably heated by maintaining it in a temperature range of, for example, from 450°C to 1000°C, preferably in a temperature range of from 600°C to 800°C, for 0.5 to 6 hours. The roasting can be carried out in either an air atmosphere or an inert atmosphere such as nitrogen, as well as in the air atmospheric and the inert atmospheres in this order or vice versa. The roasting furnace may be of a batch type or a continuous type. For example, the batch type includes a stationary furnace, the continuous type includes a rotary kiln furnace, and various other types of furnaces can also be used.

During the roasting, at least a part of the electrolyte is removed from the lithium ion battery waste because an electrolytic solution as the electrolyte is evaporated, or the like. In many cases, when the lithium ion battery waste is heated during the roasting, the components of the internal electrolyte are sequentially evaporated, starting with the component having a lower boiling point. Also, when the temperature of the lithium ion battery waste reaches a higher temperature, the resin such as the organic binder is decomposed or vaporized. Even if a part of the electrolyte and the organic binder is thus removed, a certain component such as fluorine contained in the electrolyte and the organic binder remains and may be contained in the battery powder obtained after the preprocessing step. When the roasting is carried out, the electrolyte is removed and rendered harmless, and the organic binder is decomposed to promote separation between the aluminum foil and the cathode active material during crushing and sieving, which will be described below. Although the composition of the cathode active material changes due to roasting, the roasted material is also referred to as the cathode active material.

After the roasting, the crushing can be carried out to remove cathode active materials and the like from the housing of the lithium ion battery waste. The crushing selectively separates the cathode active materials from the aluminum foils to which the cathode active materials are applied, while destroying the housings of the lithium ion battery waste.

Various known apparatuses or devices can be used in the crushing. In particular, it is preferable to use an impact-type crusher that can crush lithium ion battery waste by applying an impact while cutting it. Examples of the impact-type crusher include a sample mill, a hammer mill, a pin mill, a wing mill, a tornado mill, and a hammer crusher. It should be noted that a screen can be installed at an exit of the crusher, whereby the lithium ion battery waste is discharged from the crusher through the screen when it is crushed to a size that can pass through the screen.

After crushing the lithium ion battery waste, the sieving is performed by sieving it using a sieve having appropriate openings. Thus, aluminum or copper remains on the sieve, and the battery powder that has removed aluminum or copper to some extent can be obtained under the sieve.

If the battery powder obtained in the preprocessing step contains nickel, the nickel content is, for example, 1% by mass to 30% by mass, and typically 5% by mass to 20% by mass. If it contains cobalt, the cobalt content in the battery powder is, for example, 1% by mass to 30% by mass, typically 5% by mass to 20% by mass. The battery powder may also contain, for example, 2% to 8% by mass of lithium, 1% to 30% by mass of manganese, 1% to 10% by mass of aluminum, 1% to 5% by mass of iron, and 1% to 10% by mass of copper. The battery powder may also contain 0.1% by mass to 10% by mass of fluorine.

The battery powder can be brought into contact with water prior to an acid leaching step as described below, in order to extract substantially only lithium from the battery powder. Lithium in the battery powder is thus leached into the water. In this case, the battery powder as the water leached residue is subjected to the acid leaching step. When water leaching is performed, at least a part of the electrolytic solution or other electrolytes in the lithium ion battery waste is removed by being dissolved or discharged into the water.

However, when the water leaching is carried out, the equipment is required, and the processing time increases by performing both the water leaching and the acid leaching in the acid leaching step, as well as it may be necessary to manage the roasting conditions or the like for effectively leaching lithium with water. Further, even with such management, the leaching ratio of lithium with water may not be significantly increased. Therefore, the battery powder obtained as described above may be subjected to the acid leaching step without the water leaching. When the water leaching is not carried out, the lithium ion concentration in the liquid can be easily maintained at a higher level in wet processes after the acid leaching step.

To remove the electrolyte from lithium ion battery waste in the preprocessing step, in addition to the roasting and water leaching described above, lithium ion battery waste may be washed with a washing solution such as water at any time during the preprocessing step.

### (Acid Leaching Step)

In the acid leaching step, the metals in the battery powder are leached with an acidic leaching solution containing sulfuric acid, nitric acid, hydrochloric acid, or other inorganic acids or mineral acids. As a result, a leached solution (metal-containing solution) in which the metals in the battery powder are dissolved is obtained. Here, a solution that contains metal ions due to the dissolution of metal in the acid leaching step and is sent to the next step, the neutralization step, refers to a metal-containing solution. The solution in the middle of the neutralization step and subsequent steps may also be referred to as a metal-containing solution.

It should be noted that for a pH, it may preferably be -0.5 to 3.0 in the acid leaching solution during leaching, and may be 0.5 to 2.0 in the leached solution after leaching is completed. During leaching, for example, the acidic leaching solution may be agitated at 100 rpm to 400 rpm using an agitator if necessary, and a temperature of the solution may be 65°C to 70°C.

In the acid leaching step, a plurality of leaching stages are repeated multiple times, as shown in Fig. 3. Each of the plurality of leaching stages includes a first leaching stage of leaching the metals in the battery powder into an acidic leaching solution, terminating leaching before copper elution, and separating the leached residue to obtain a leached solution, and a second leaching stage of leaching the leached residue from the first leaching stage into an acidic leaching solution, and terminating leaching after copper elution to obtain a leached solution. The leached solution obtained in the first leaching stage is the metal-containing solution that is sent to the next step such as neutralization described below. On the other hand, the leached solution obtained in the final leaching stage among the plurality of leaching stages (the second leaching stage if there are two stages, the first leaching stage and the second leaching stage) is included in the acidic leaching solution and used in the next first leaching stage.

When the plurality of leaching stages are repeated in such a manner, a leaching ratio of the metal to be leached (such as cobalt and/or nickel) in the battery powder can be increased, while much of the copper that is desired to be suppressed can be separated as a leached residue without leaching. More details are as follows. As an example, a case where the battery powder contains cobalt, nickel, and copper is described, but the battery powder may not contain either cobalt or nickel, and may further contain other metals.

As an example of repeating the plurality of leaching stages, in the first leaching stage of the first cycle, leaching is terminated before copper dissolves (for example, while the copper ion concentration in the acidic leaching solution is 0.01 g/L or less), and the leached residue is removed by solid-liquid separation. In this way, a leached solution is obtained that contains cobalt ions and nickel ions and has a lower copper ion concentration than at least the leached solution obtained in the second leaching stage described below. The leached solution is sent to the subsequent step as the metal-containing solution. On the other hand, the leached residue contains cobalt and nickel that remain undissolved, as well as copper. A second leaching stage is performed to further leach cobalt and nickel from the leached residue.

In the second leaching stage of the first cycle, the leached residue obtained in the first leaching stage is brought into contact with an acidic leaching solution to leach the cobalt and nickel in the leached residue. In the second leaching stage, leaching is continued even after copper dissolves (for example, after the copper ion concentration in the acidic leaching solution becomes higher than 0.01 g/L). This allows almost all of the cobalt and nickel in the leached residue to be leached. Once copper dissolves and cobalt and nickel are sufficiently leached, leaching is terminated and the leached residue is removed by solid-liquid separation, resulting in the leached residue with suppressed cobalt and nickel content and containing copper. The leached solution after the leached residue is removed contains cobalt ions, nickel ions, and copper ions. In the second leaching stage, new battery powder may be fed in to leach not only the metals in the leached residue from the first leaching stage, but also the metals in the new battery powder. In the second leaching stage, leaching is continued after the copper has dissolved out, so that the cobalt and nickel in the new battery powder can also be sufficiently leached.

Then, in the first leaching stage of the second cycle, the leached solution obtained in the second leaching stage of the first cycle is used as the acidic leaching solution. At this time, a new acidic leaching solution may be added if necessary. In the first leaching stage of the second cycle, copper ions in the above leached solution are reduced by a substitution reaction with metals less noble than copper in the new battery powder that is fed thereto, and are precipitated as copper and contained in the leached residue. Further, in the first leaching stage of the second cycle, cobalt and nickel dissolve from the new battery powder, but since the stage is terminated before copper dissolves, the leached residue will include copper derived from the new battery powder as well as cobalt and nickel that remain undissolved. The leached residue is removed by solid-liquid separation and subjected to leaching in the second leaching stage of the second cycle. The leached solution that has removed the leached residue contains not only cobalt ions and nickel ions dissolved from the new battery powder, but also cobalt ions and nickel ions carried over from the first cycle, and is sent to the subsequent step.

The second leaching stage of the second cycle is performed in the same manner as the second leaching stage of the first cycle, and therefore repeated description thereof will be omitted. Solid-liquid separation in the second leaching stage is not required to be performed every time. If solid-liquid separation is not performed in the second leaching stage, the leached solution containing the leached residue is sent to the next first leaching stage, and copper is accumulated in the leached residue. If solid-liquid separation is performed in the second leaching stage in at least one of the multiple cycles, the leached residue containing copper can be separated and removed in the second leaching stage of that cycle. Preferably, solid-liquid separation is performed in each second leaching stage to remove the copper-containing leached residue each time.

Here, "before copper elution" in the first leaching stage means that the copper ion concentration in the acidic leaching solution is lower than in the leached solution obtained in the second leaching stage of that cycle. For example, when the copper ion concentration in the acidic leaching solution is 0.01 g/L or less, it may be considered "before copper elution". However, the copper ion concentration does not include the copper ion concentration of the leached solution obtained in the previous second leaching stage and used as the acidic leaching solution in the current first leaching stage. When the leached solution obtained in the previous second leaching stage is used as the acidic leaching solution in the first leaching stage, the period during which the relatively high copper ion concentration before leaching tends to decrease due to copper precipitation by the substitution reaction is terminated, and for example, after the copper ion concentration once becomes 0.01 g/L or less, the period while the copper ion concentration remains at 0.01 g/L or less can be considered "before copper elution". In this case, it may be terminated while the copper ion concentration is 0.01 g/L or less (before the copper ion concentration is more than 0.01 g/L).

Here, "after copper elution" in the second leaching stage means that the copper ion concentration in the acidic leaching solution is higher than in the leached solution obtained in the first leaching stage of that cycle. Therefore, in each cycle, the copper ion concentration of the leached solution obtained in the second leaching stage is higher than the copper ion concentration of the leached solution obtained in the first leaching stage. For example, when the copper ion concentration in the acidic leaching solution is higher than 0.01 g/L, it may be considered "after copper elution". In the second leaching stage, for example, leaching may be terminated after the copper ion concentration in the acidic leaching solution becomes higher than 0.01 g/L.

In the first leaching stage and the second leaching stage, the oxidation-reduction potential (based on silver/silver chloride potential) of the acidic leaching solution may be sufficiently lower than 0 mV before leaching and may gradually increase as leaching proceeds. Hereinafter, the "oxidation-reduction potential (based on silver/silver chloride potential)" is simply referred to as an "oxidation-reduction potential". The oxidation-reduction potential may be referred to as ORP.

In the first leaching stage, leaching is terminated before the oxidation-reduction potential of the acidic leaching solution preferably becomes 0 mV or higher, more preferably before it becomes higher than -300 mV. This is because a higher oxidation-reduction potential may increase the copper ion concentration to some extent, and the leached solution may contain copper ions.

On the other hand, in the second leaching stage, it is preferable to terminate leaching after the oxidation-reduction potential of the acidic leaching solution becomes 0 mV or higher. This allows much of the cobalt and nickel to be leached, thereby reducing cobalt and nickel losses. However, in the second leaching stage, it is preferable to terminate leaching before the oxidation-reduction potential of the acidic leaching solution becomes higher than 60 mV in order to prevent excessive leaching of copper.

In the first leaching stage and the second leaching stage, the rate of increase in the oxidation-reduction potential of the acidic leaching solution tends to become faster as metal leaching progresses to some extent. In the first leaching stage, it is preferable to terminate it before the hourly increase in the oxidation-reduction potential of the acidic leaching solution becomes 233 mV or higher in order to suppress copper leaching. On the other hand, in the second leaching stage, it is preferable to terminate it after the hourly increase in the oxidation-reduction potential of the acidic leaching solution becomes 233 mV or higher from the viewpoint of leaching as much cobalt and nickel as possible. The hourly increase in oxidation-reduction potential means the value of the oxidation-reduction potential at a given time minus the value of the oxidation-reduction potential before one hour at that time.

In the first or second leaching stage, for example, leaching can be considered to have been terminated when the agitation by the agitator that was being done during leaching is stopped and the next operation, such as solid-liquid separation or feeding new battery powder, is started. Solid-liquid separation to remove the leached residue from the leached solution can be performed by known equipment and methods such as filter presses and thickeners.

The plurality of leaching stages may include not only the first and second leaching stages, but also three or more leaching stages. For example, the first leaching stage and/or the second leaching stage may be divided into multiple stages. At this time, all of the divided first leaching stages are terminated while the copper ion concentration in the acidic leaching solution is lower than the copper ion concentration in the leached solution obtained in the second leaching stage. For example, each of the plurality of first leaching stages may be terminated while the copper ion concentration in the acidic leaching solution is 0.01 g/L or less. In addition, all of the divided second leaching stages are terminated after the copper ion concentration in the acidic leaching solution becomes higher than the copper ion concentration in the leached solution obtained in the first leaching stage. For example, in each of the plurality of second leaching stages, leaching may be terminated after the copper ion concentration in the acidic leaching solution becomes higher than 0.01 g/L.

In repeating the first and second leaching stages multiple times as described above, it is desirable to suppress the transferring of cobalt and nickel into the leached residue of the second leaching stage as much as possible, because the transferring leads to losses of cobalt and nickel. Specifically, when the battery powder contains cobalt, on a mass basis, when the sum or total of the cobalt content of the battery powder subjected to the first leaching stage in a given cycle and the cobalt ion content of the acidic leaching solution used in the first leaching stage of that cycle is taken as 100%, it is preferable that in each cycle, the sum of the cobalt ion content of the leached solution obtained in the first leaching stage and the cobalt ion content of the leached solution obtained in the second leaching stage is 95% or more. In addition, if the battery powder contains nickel, on a mass basis, when the sum or total of the nickel content of the battery powder subjected to the first leaching stage in a given cycle and the nickel ion content of the acidic leaching solution used in the first leaching stage of that cycle is taken as 100%, it is preferable that in each cycle, the sum of the nickel ion content in the leached solution obtained in the first leaching stage and the nickel ion content in the leached solution obtained in the second leaching stage is 95% or more. Here, in the first cycle, the cobalt ion content and nickel ion content of the acidic leaching solution used in the first leaching stage above are both zero. Further, in each cycle in the second cycle and subsequent cycle, the cobalt ion content and nickel ion content of the acidic leaching solution used in the first leaching stage above mean the cobalt ion content and nickel ion content of the leached solution obtained in the immediately preceding second leaching stage and used as the acidic leaching solution in the first leaching stage.

In at least one of the plurality of leaching stages in the acid leaching step, the acidic leaching solution contains a phosphate ion source and/or a calcium ion source. The phosphate ion source and/or calcium ion source may be included in the battery powder, but if this is not sufficient, a phosphate ion source and/or a calcium ion source may be added to the acidic leaching solution separately from the battery powder.

The timing of addition of the phosphate and/or calcium ion sources is not required, as long as it is before the end of leaching in the leaching stage (or after the end of leaching and before solid-liquid separation if the solid-liquid separation is performed). The phosphate ion source and/or calcium ion source may be added to the acidic leaching solution together with the battery powder, or may be added to the acidic leaching solution before or after the battery powder is brought into contact with the acidic leaching solution. The addition of the phosphate ion source and/or the calcium ion source may be performed after the start of leaching in the leaching stage. For example, when the battery powder is mixed with water such as distilled water to form a slurry and then acid such as sulfuric acid is added to the slurry to prepare an acidic leaching solution, the phosphate ion source and/or calcium ion source may be added to the slurry before acid addition, or the phosphate ion source and/or calcium ion source may be added to the slurry together with the acid. If the lithium ion battery waste and the battery powder obtained by performing the preprocessing step contain a phosphate ion source and/or a calcium ion source, contact between the battery powder and the acidic leaching solution will cause the acidic leaching solution to include the phosphate ion source and/or calcium ion source.

As the phosphate ion source and calcium ion source, various materials can be used as long as they produce phosphate ions (PO₄³⁻) and calcium ions (Ca²⁺) upon contact with the acidic leaching solution. Specifically, examples of the phosphate ion source include phosphoric acid (H₃PO₄), calcium phosphate (Ca₃(PO₄)₂, and the like), calcium hydrogen phosphate (CaHPO₄), trisodium phosphate (Na₃PO₄), disodium hydrogen phosphate (Na₂HPO₄), sodium dihydrogen phosphate (NaH₂PO₄), and lithium phosphate (Li₃PO₄). Calcium phosphate and calcium hydrogen phosphate are preferred because they act as both phosphate and calcium ion sources. The calcium ion source includes calcium sulfate (CaSO₄), calcium carbonate (CaCO₃), calcium hydroxide (Ca(OH)₂), other calcium compounds, and elemental calcium. Calcium sulfate is particularly suitable because it does not cause an increase in the pH of the acidic leaching solution which would otherwise occur when calcium carbonate or calcium hydroxide is used.

If the acidic leaching solution contains the phosphate ion source, aluminum can be precipitated by forming compounds such as aluminum orthophosphate (AlPO₄), for example. If the acidic leaching solution contains the calcium ion source, aluminum may be precipitated as compounds such as LiCa(AlF₆), Ca₃Al₂F₈(OH)₂(SO₄)·2H₂O, Ca₂AlF₇, for example.

If the acidic leaching solution contains the calcium ion source, it is preferable that the acidic leaching solution contains not only the calcium ion source but also fluorine, so that aluminum can easily form the above compounds further containing fluorine, and the like. Fluorine may also be present in the battery powder. For example, lithium ion battery waste (such as glass fiber from battery cells, electrolytes, and organic binders) may contain calcium and fluorine, which can remain in the battery powder. Fluorine, on the other hand, may be added to the acidic leaching solution separately from the battery powder, if necessary. The calcium ion source and/or fluorine may be added to the acidic leaching solution separately from the battery powder. It is also possible to mix several types of battery powders with different calcium and/or fluorine contents.

When fluorine is added to the acidic leaching solution, the form of fluorine may be, for example, a fluoride salt, specifically at least one selected from the group consisting of lithium fluoride (LiF), sodium fluoride (NaF), and potassium fluoride (KF). Other options for including fluorine in the acidic leaching solution include the use of hydrofluoric acid (HF) as at least part of the acid.

The amount of calcium and phosphoric acid to be included in the acidic leaching solution can be determined appropriately, taking into account the aluminum content of the battery powder and other conditions. Specifically, component analysis may be performed in advance on the battery powder to be fed in each cycle of the leaching stages repeated multiple times in the acid leaching step to determine the aluminum content of the battery powder, and the amount of calcium and phosphoric acid may be determined based on this. In at least one of the plurality of leaching stages, preferably in each cycle, the molar ratio of calcium to aluminum (Ca/Al molar ratio) is preferably 0.20 or more or more than 0.20, and even more preferably from 0.5 to 2.0. The amount of calcium as used herein refers to the total amount of calcium in the acidic leaching solution (including the amount added to the acidic leaching solution, if any), regardless of whether or not at least some of the calcium in the acidic leaching solution is dissolved. For example, the molar ratio of phosphorus in phosphoric acid to aluminum (P/Al molar ratio) may preferably be 0.5 or more, and more preferably 1.0 or more. In each cycle of the leaching stages, if the battery powder contains calcium and the calcium content or phosphorus content of the battery powder is not sufficient, the required amount of calcium or phosphoric acid can be added separately.

Substances containing the battery powder to be brought into contact with the acidic leaching solution (including the additive if the calcium ion source is added separately) contain a certain larger amount of fluorine relative to aluminum, whereby a large amount of aluminum can be precipitated in the form of LiCa(AlF₆), or the like. Specifically, in at least one cycle, and preferably in each cycle, of the repeated leaching stages, the molar ratio of fluorine to aluminum (F/Al molar ratio) of the substance to be brought into contact with the acidic leaching solution is preferably 1.3 or more. If the F/Al molar ratio is less than 1.3, much of the aluminum in the precipitate precipitated in the acid leaching step is not combined with calcium and forms Li-Al composite hydroxide. Since Li-Al composite hydroxide has a higher solubility in the acidic leaching solution than LiCa(AlF₆), when the precipitate form is Li-Al composite hydroxide, the amount of aluminum precipitated will be smaller and aluminum removal will be insufficient. Therefore, if the F/Al molar ratio of the above substance is less than 1.3, fluorine can be added to the substance to adjust the F/Al molar ratio to 1.3 or more. When the F/Al molar ratio is set to 2.0 or more, or even 3.0 or more, almost all of the aluminum in the precipitate may become LiCa(AlF₆), which can achieve further effective removal of aluminum.

If the battery powder contains a relatively large amount of fluorine, the F/Al molar ratio of the battery powder may be 1.3 or more. Alternatively, fluorine may be added separately from the battery powder and the F/Al molar ratio adjusted so that the F/Al molar ratio is 1.3 or more. If fluorine is added to the acidic leaching solution after leaching of the battery powder has begun, the total amount of fluorine in the acidic leaching solution and precipitate after the addition of fluorine is theoretically equal to the amount of fluorine in the substance to be brought into contact with the acidic leaching solution. Therefore, the above F/Al molar ratio can be determined from the total amount of fluorine in the acidic leaching solution and precipitate after the addition of fluorine.

In the plurality of leaching stages, the timing for including or adding a phosphate ion source and/or a calcium ion source to the acidic leaching solution to precipitate aluminum is not particularly limited, but the first leaching stage is preferable. In this case, in the first leaching stage, the concentration of aluminum ions in the leached solution sent to the neutralization step as the metal-containing solution is easily reduced, as well as the concentration of the phosphate ion source and/or calcium ion source in the acidic leaching solution can be increased. When the phosphate ion source and/or the calcium ion source is included or added to the acidic leaching solution in the second leaching stage to precipitate aluminum, the phosphate ion source and/or the calcium ion source are consumed in the second leaching stage. At this time, if the leached solution obtained in the second leaching stage is used as the acidic leaching solution in the next first leaching stage, there is a risk that sufficient amounts of phosphate ion source and/or calcium ion source may not be obtained to precipitate the aluminum in the new battery powder. Even if the phosphate ion source and/or the calcium ion source is included or added in the first leaching stage, aluminum may be precipitated in the second leaching stage.

It should be noted that the metal containing solution obtained in the acid leaching step may have a cobalt ion concentration of 10 g/L to 50 g/L, a nickel ion concentration of 10 g/L to 50 g/L, a manganese ion concentration of 0 g/L to 50 g/L, an aluminum ion concentration of 1.0 g/L to 20 g/L, an iron ion concentration of 0.1 g/L to 5.0 g/L, and a copper ion concentration of 0.005 g/L to 0.2 g/L. The metal-containing solution may contain at least one of nickel ions and cobalt ions without containing the other.

### (Neutralization Step)

As described above, in the acid leaching step, a metal-containing solution with a suppressed leaching ratio of aluminum is obtained due to the action of the phosphate ion source and/or the calcium ion source. The neutralization step is performed to remove mainly aluminum ions from this metal-containing solution.

In the neutralization step, the pH of the metal containing solution is increased and the neutralized residue is separated to obtain a neutralized solution. The neutralization may include an aluminum removal stage. In the aluminum removal stage, the pH of the metal-containing solution is increased to precipitate at least a part of the aluminum ions and remove them. If the metal-containing solution contains iron ions, the neutralization preferably also includes an iron removal stage to remove iron ions after the aluminum removal stage. In the iron removal stage, iron ions can be removed by adding an oxidant to the aluminum removed solution obtained in the aluminum removal stage and further adding an alkali to increase the pH. This provides a neutralized solution as an iron removed solution or the like. However, if the metal containing solution is substantially free of iron ions, the iron removal stage may be omitted.

When removing aluminum ions during the aluminum removal stage, the pH of the metal-containing solution can be increased to a range of 2.5 to 5.0, typically 3.0 to 4.5, by the addition of a pH adjusting agent. During the aluminum removal stage, the oxidation-reduction potential may be 50 mV to 400 mV (250 mV to 350 mV at the end). This allows aluminum ions to be effectively separated while suppressing precipitation of nickel ions and/or cobalt ions. At this time, the temperature of the metal-containing solution can be 50°C to 90°C.

The metal-containing solution does not contain so many aluminum ions because the leaching of aluminum was suppressed by the action of the phosphate ion source and/or the calcium ion source in the acid leaching step. Further, in the first leaching stage of the acid leaching step, leaching is terminated before copper elution, and the metal-containing solution thus obtained may have a somewhat lower oxidation-reduction potential. For such reasons, in the aluminum removal stage, almost all of the remaining aluminum ions can be effectively removed without significantly increasing the pH of the metal-containing solution. If the pH of the metal-containing solution in the aluminum removal stage is not so high, the precipitation of cobalt and/or nickel in the metal-containing solution and the consequent loss of cobalt and/or nickel are suppressed. From this perspective, the pH of the metal-containing solution is preferably 4.5 or less in the aluminum removal stage of the neutralization step.

After aluminum is precipitated, solid-liquid separation such as filtration is performed using known equipment and methods such as filter presses and thickeners to remove the neutralized residue and obtain the aluminum removed solution.

Next, in the iron removal stage, an oxidizing agent can be added to the aluminum removed solution to remove iron ions from the aluminum removed solution. The addition of the oxidizing agent oxidizes iron in the liquid from divalent iron to trivalent iron, and the trivalent iron is precipitated as oxide or hydroxide at a lower pH than the divalent iron. In many cases, iron is precipitated as a solid such as iron hydroxide (Fe(OH)₃). Precipitated iron can be removed as a neutralized residue by solid-liquid separation.

To precipitate iron, the ORP value during oxidation is preferably 300 mV to 900 mV. After the addition of the oxidizing agent, an acid such as sulfuric acid, hydrochloric acid, and nitric acid can be added to lower the pH to less than 3, for example. The iron can then be precipitated by adding a pH adjusting agent to adjust the pH to a range of 3.0 to 4.5, for example.

The oxidizing agent is not particularly limited as long as it can oxidize iron, but it may preferably be manganese dioxide, a cathode active material, and/or a manganese-containing leached residue obtained by leaching a cathode active material. The manganese-containing leached residue obtained by leaching the cathode active material with the acid or the like may include manganese dioxide. When the cathode active material or the like is used as the oxidizing agent, it causes a precipitation reaction which converts manganese dissolved in the liquid to manganese dioxide, so that the precipitated manganese can be removed together with iron.

Specifically, alkaline pH adjusting agents used in the neutralization step include lithium hydroxide, sodium hydroxide, sodium carbonate, and ammonia. In particular, as the lithium hydroxide solution, the solution obtained in the hydroxide step described below can be used, and in this case, lithium ions are circulated within a series of steps in the wet process.

In the aluminum removal stage of the neutralization step, it is preferable to include the phosphate ion source and/or the calcium ion source in the metal-containing solution. In this case, aluminum ions in the metal-containing solution are more easily precipitated by the phosphate ion source and/or the calcium ion source, and aluminum can be effectively removed.

With respect to the inclusion of the phosphate and/or calcium ion sources in the metal-containing solution, if the metal-containing solution already contains required amounts of phosphate and/or calcium ion sources, it may not be necessary to add additional phosphate and/or calcium ion sources to it. Alternatively, if the metal-containing solution does not contain the phosphate ion source and/or the calcium ion source, or if the phosphate ion source and/or calcium ion source in the metal-containing solution is insufficient, a phosphate ion source and/or a calcium ion source may be added to the metal-containing solution before, during, and/or after the pH of the metal-containing solution is increased to a predetermined value. The forms of phosphate ion sources and/or calcium ion sources to be added to the metal-containing solution are not particularly limited, but they may include, for example, phosphoric acid (H₃PO₄), calcium phosphate (Ca₃(PO₄)₂, etc.), calcium hydrogen phosphate (CaHPO₄), trisodium phosphate (Na₃PO₄), disodium hydrogen phosphate (Na₂HPO₄), sodium dihydrogen phosphate (NaH₂PO₄), lithium phosphate (Li₃PO₄), calcium sulfate (CaSO₄), calcium carbonate (CaCO₃), calcium hydroxide (Ca(OH)₂), and elemental calcium.

When the metal-containing solution contains the calcium ion source, the molar ratio of calcium to aluminum (Ca/Al molar ratio) as the amount of calcium contained in the metal-containing solution in the aluminum removal stage of the neutralization step is preferably 0.20 or more or more than 0.20, more preferably from 0.5 to 3.0, and particularly preferably from 0.5 to 1.5, in order to sufficiently remove aluminum. The amount of calcium as used herein includes the amount of undissolved calcium, if any, in the metal-containing solution.

If the metal-containing solution also contains the calcium ion source, it is preferable that it also contains fluorine. In this case, the above molar ratio of fluorine to aluminum (F/Al molar ratio) can be 1.3 or more. The F/Al molar ratio of the raw material is preferably 2.0 or more, and more preferably 3.0 or more. When the F/Al molar ratio is larger in this way, the aluminum in the precipitate that will be precipitated in the aluminum removal stage tends to be in the form of LiCa(AlF₆) rather than Li-Al composite hydroxide, and the aluminum ions in the metal-containing solution are removed more effectively.

If the metal-containing solution contains the phosphate ion source, the neutralized residue may contain compounds such as aluminum orthophosphate (AlPO₄), for example. If the metal-containing solution contains the calcium ion source, the neutralized residue is expected to contain at least one selected from the group consisting of Ca(SO₄)(H₂O)_{0.5}, LiCa(AlF₆), Ca₃Al₂F₈(OH)₂(SO₄)·2H₂O, and Ca₂AlF₇, for example. When lithium hydroxide is used as a pH adjusting agent, the neutralized residue may contain LiCa(AlF₆), and when sodium hydroxide is used, the neutralized residue may contain Na₃Li₃(AlF₆)₂. The composition of LiCa(AlF₆) is Ca:Al = 1:1, but the above mentioned Ca/Al molar ratio in the neutralization step can be larger than 1.0, considering that calcium can be consumed by other compounds.

If one of the phosphate ion source and the calcium ion source is added to the acidic leaching solution in the acid leaching step, the other of the phosphate ion source and the calcium ion source is preferably added to the metal-containing solution in the neutralization step (in this embodiment, in the aluminum removal stage). When aluminum is precipitated by the action of the calcium ion source, fluorine may be consumed along with it. As described above, by changing what is included in the acid leaching step and neutralization step between the phosphate ion source and the calcium ion source, aluminum can be effectively removed while avoiding insufficiency of fluorine. Compared to the use of phosphate ion sources in both the acid leaching step and neutralization step, the amount of expensive phosphoric acid used can be reduced, thereby suppressing the increase in processing costs. More preferably, the calcium ion source is added to the acidic leaching solution in the acid leaching step and the phosphate ion source is added to the metal-containing solution in the neutralization step. This makes it possible to remove a certain amount of aluminum with the calcium ion source and then add a required amount of phosphate ion source.

### (Manganese Extracting Step)

For the neutralized solution obtained after the neutralization step, manganese ions and, in some cases, the remainder of aluminum ions can be extracted and removed by solvent extraction. In this case, the remainders of manganese and aluminum ions are extracted, resulting in a manganese extracted solution that have removed them.

In the manganese extraction step, an extracting agent containing a phosphate ester-based extracting agent is preferably used. Here, examples of the phosphate ester-based extracting agent include di-2-ethylhexylphosphoric acid (abbreviated name: D2EHPA or trade name: DP8R), and the like. Further, the extracting agent may be a mixture of the phosphate ester-based extracting agent and an oxime-based extracting agent. In this case, the oxime-based extracting agent is preferably aldoxime or based on aldoxime. Specific examples include 2-hydroxy-5-nonylacetophenone oxime (trade name: LIX84), 5-dodecyl salicylaldoxime (trade name: LIX860), a mixture of LIX84 and LIX860 (trade name: LIX984), 5-nonyl salicylaldoxime (trade name: ACORGAM5640) and the like.

During extraction, an equilibrium pH is preferably 2.3 to 3.5, and more preferably 2.5 to 3.0. The alkaline pH adjusting agent used herein may preferably be a lithium hydroxide solution obtained in the hydroxide step as described below, but separately prepared sodium hydroxide or the like may also be used. When the lithium hydroxide solution obtained in the hydroxide step is used as the pH adjusting agent, it is possible to suppress the residual sodium in the lithium-containing solution step after a nickel extraction step described below and the mixing of the sodium as an impurity into the lithium hydroxide solution generated from the lithium-containing solution, which would occur when sodium hydroxide is used as the pH adjusting agent.

At the time of extraction, it is desirable to carry out extraction by countercurrent type multistage extraction in which directions of the flow of the aqueous phase and the solvent used for each extraction are opposite to each other. By doing so, the extraction of cobalt ions, nickel ions, and lithium ions can be suppressed, and the extraction ratio of manganese ions can be increased. In the case of the countercurrent type multistage extraction, it is effective to set the equilibrium pH at the first stage of extraction to a value in the above range, and decrease the equilibrium pH at the time of extraction through successive stages.

Since the solvent that has extracted manganese ions may contain cobalt ions, nickel ions, and lithium ions, it can be subjected to stripping after performing scrubbing. For example, the scrubbing solution can be a sulfuric acid solution having a pH of 2.0 to 3.0, and the stripping solution can be a sulfuric acid solution having a pH of 0.0 to 1.0. It is desirable to use the scrubbed solution and the stripped solution in manganese extraction (for example, mixing the scrubbed solution with the metal-containing solution and using it as the solution before extraction for extracting manganese ions, using the stripped solution for scrubbing the solvent that has extracted manganese ions, or using the scrubbed solution as the stripping solution used for the solvent that has extracted manganese ions). As a result, the cobalt ions, nickel ions, and lithium ions can be circulated or retained in the steps to concentrate them, without losing them. However, if the solvent that has extracted manganese ions does not contain cobalt ions, nickel ions, or lithium ions, scrubbing and stripping need not be performed.

### (Cobalt Extracting Step)

A cobalt extraction step can then be performed. In the cobalt extraction step, cobalt ions are separated from the manganese extracted solution obtained step after the manganese extraction by solvent extraction.

It is preferable to use a solvent containing a phosphonate ester-based extracting agent for the cobalt extraction step. Among these, 2-ethylhexyl 2-ethylhexylphosphonate (trade name: PC-88A, Ionquest 801) is particularly preferable from the viewpoint of separation efficiency between nickel and cobalt. The extracting agent may be diluted with an aromatic, paraffinic, naphthenic, or other hydrocarbon-based organic solvent to a concentration of 10% to 30% by volume and used as a solvent.

When extracting the cobalt ions, the equilibrium pH during extraction can preferably be 5.0 to 6.0, and more preferably 5.0 to 5.5. As the alkaline pH adjusting agent used herein, it is preferable to use a lithium hydroxide solution obtained in the hydroxide step as described below, but separately prepared sodium hydroxide or the like may also be used. If the pH is less than 5.0, cobalt ions may not be sufficiently extracted into the solvent. This allows the cobalt ions in the manganese extracted solution to be extracted into the solvent.

It should be noted that in the extraction of the cobalt ions as well, it is desirable to carry out the extraction by countercurrent type multistage extraction in which directions of flow of the aqueous phase and the solvent used for each extraction are opposite to each other. By doing so, it is possible to increase an extraction ratio of cobalt ions while suppressing the extraction of nickel ions and lithium ions.

During the above extraction, not only cobalt ions but also nickel ions, lithium ions and the like which would otherwise serve as impurities in the cobalt extraction step, may be somewhat extracted into the solvent. In this case, if necessary, the solvent which has extracted the cobalt ions may be subjected to one or more scrubbing processes using a scrubbing solution to remove impurities such as nickel ions that may be contained in the solvent. The scrubbing solution can be, for example, a sulfuric solution having a pH of 3.5 to 5.5. The scrubbed solution may contain nickel ions and lithium ions. Therefore, it is desirable to use part or all of the scrubbed solution for extraction in cobalt extraction (that is, to mix part or all of the scrubbed solution with the solution after manganese extraction and use it as the solution before extraction to perform cobalt extraction). As a result, the nickel ions and lithium ions can be circulated or retained in the step without losing them. However, if the solvent used to extract the cobalt ions does not contain nickel ions or lithium ions, the scrubbing may not be performed.

The solvent that has extracted the cobalt ions is subjected to stripping. A stripping solution used for the stripping may be any inorganic acid such as sulfuric acid, hydrochloric acid, and nitric acid, but sulfuric acid is preferable when a sulfate is obtained in crystallization described below. Here, it is carried out under pH conditions such that all the cobalt ions transfer from the organic phase (solvent) to the aqueous phase ( stripping solution)as much as possible. Specifically, the pH is preferably in the range of 2.0 to 4.0, and more preferably in the range of 2.5 to 3.5. It should be noted that the O/A ratio and the number of times can be determined as needed. The liquid temperature can be room temperature, but preferably 10°C to 50°C.

The stripped solution obtained by the stripping of the cobalt ions can be subjected to crystallization. In the crystallization, the stripped solution is heated to, for example, 40°C to 120°C and concentrated, whereby the cobalt ions are crystallized as cobalt salts. The cobalt salt thus provided preferably has a nickel content of 5 ppm by mass or less, and has sufficiently removed the nickel, so that it can be effectively used as a raw material for producing lithium ion batteries or other batteries. Here, the crystallized solution may contain uncrystallized cobalt ions and lithium ions. Therefore, it is preferable that the crystallized solution is mixed with the stripped solution before the crystallization and used for recrystallization, or used for adjusting the cobalt ion concentration of the scrubbing solution used for the solvent after cobalt ion extraction, or used for the cobalt extraction. By repeatedly using them in the steps in this manner, the cobalt ions and lithium ions can be circulated or retained and concentrated in the steps without losing them.

### (Nickel Extracting Agent)

Subsequently, the cobalt extracted solution after the cobalt ions have been extracted can be subjected to a nickel extraction step.

In the nickel extraction step, a carboxylic acid-based extracting agent is preferably used to separate nickel ions from the cobalt extracted solution. Examples of the carboxylic acid-based extracting agent include neodecanoic acid and naphthenic acid. Among them, the neodecanoic acid is preferred because of its ability to extract nickel ions. The extracting agent may be diluted with an aromatic, paraffinic, naphthenic, or other hydrocarbon-based organic solvent to a concentration of 10% to 30% by volume and used as a solvent.

In extraction of the nickel ions, an equilibrium pH is preferably 6.0 to 8.0, and more preferably 6.8 to 7.2. The pH adjusting agent used to adjust the pH at this time may also be lithium hydroxide or the like, but a lithium hydroxide solution obtained in the hydroxide step as described below is preferably used. In the nickel ion extraction, it is desirable to perform the extraction by the countercurrent type multistage extraction as with the cobalt ion extraction described above. By doing so, the extraction of lithium ions can be suppressed, and the extraction rate of nickel ions can be increased.

The solvent which has extracted the nickel ions may optionally be subjected to one or more scrubbing processes using a scrubbing solution to remove impurities such as lithium ions and ions that may be contained in the solvent. The scrubbing solution can be, for example, a sulfuric solution having a pH of 5.0 to 6.0. Here, the resulting scrubbed solution may contain lithium ions. Therefore, it is desirable to use part or all of the scrubbed solution for nickel extraction (that is, to mix part or all of the scrubbed solution with the cobalt extracted solution and use it as the solution before extraction to perform nickel extraction). As a result, the lithium ions can be circulated or retained and concentrated in the steps without losing them. However, if the solvent used to extract the nickel ions does not contain lithium ions, the scrubbing may not be performed.

The solvent that has extracted the nickel ions is subjected to stripping using a stripping solution such as sulfuric acid, hydrochloric acid, or nitric acid. The sulfuric acid is particularly preferred if crystallization is then performed. The pH is preferably in the range of 1.0 to 3.0, and more preferably 1.5 to 2.5. Although the O/A ratio and the number of times can be determined as needed, the O/A ratio is 5 to 1, and more preferably 4 to 2.

When the extracted solution such as a nickel sulfate solution is obtained by the stripping, electrolysis and dissolution can be carried out as needed, and the solution can be then heated to 40°C to 120°C to crystalize the nickel ions as a nickel salt such as nickel sulfate. This provides the nickel salt. Here, the crystallized solution may contain uncrystallized nickel ions and lithium ions. Therefore, it is preferable that the crystallized solution is mixed with the stripped solution before the crystallization and used for recrystallization, or used for adjusting the nickel ion concentration of the scrubbing solution used for the solvent after nickel ion extraction, or used for the extraction of the nickel ions. By repeatedly using them in the steps in this manner, the nickel ions and lithium ions can be circulated or retained and concentrated in the steps without losing them.

At least a part of the lithium containing solution after the nickel ions have been extracted can be mixed with the acid leaching solution and the mixture can be used in the acid leaching step, as described above. This allows the lithium ions contained in the lithium containing solution to be circulated in a series of steps including the acid leaching step, neutralization step and various extraction steps. Preferably, after the lithium ion concentration of the lithium containing solution has been increased to some extent by thus circulating the lithium ions, the hydroxide step as described below are carried out.

### (Hydroxylation Step)

The lithium-containing solution obtained after the nickel extraction step contains substantially only lithium ions as step a result of the separation of each of the manganese, cobalt, and nickel ions in each of the extraction steps described above. In the hydroxide step, a lithium hydroxide solution is produced from the above lithium-containing solution (lithium sulfate solution or the like) by various methods described below.

For example, first, a lithium carbonate solution is obtained by adding a carbonate to the lithium sulfate solution or by blowing a carbon dioxide gas into it. Subsequently, as a so-called chemical conversion method, calcium hydroxide can be added to the lithium carbonate solution to generate the lithium hydroxide solution under the reaction formula: Li₂CO₃ + Ca(OH)₂ → 2LiOH + CaCO₃. Calcium ions that may remain in the solution can be removed with a cation exchange resin, a chelate resin, or the like.

Alternatively, barium hydroxide can be added to the lithium sulfate solution to obtain the lithium hydroxide solution based on the reaction: Li₂SO₄ + Ba(OH)₂ → 2LiOH + BaSO₄. At this time, barium that can be dissolved in the solution can be separated and removed using a cation exchange resin, a chelate resin, or the like.

Alternatively, if the so-called electrolysis method is employed, the lithium hydroxide solution can be generated on the cathode side by feeding a lithium sulfate solution to the anode side for electrolysis in an electrolyzer with a cation exchange membrane that separates the anode and cathode sides.

The lithium hydroxide solution thus obtained can be effectively used as an alkaline pH adjusting agent in the manganese extraction step, the cobalt extraction step, and the nickel extraction step, in addition to as a pH adjusting agent (neutralizing agent) in neutralization.

In the electrolysis method of the techniques described above, the lithium sulfate solution may be fed to the desalting chamber between an anion-exchange membrane and a cation-exchange membrane in a bipolar membrane electrodialyzer. In this case, the lithium hydroxide solution may be obtained in an alkaline chamber between the cation exchange membrane and the bipolar membrane, while an acidic solution such as a sulfuric acid solution may be obtained in an acid chamber between the bipolar membrane and the anion exchange membrane. Such an acidic solution can be included in the separated solution as described earlier and mixed with the acidic leaching solution and used in the acid leaching step.

The lithium-containing solution may contain trace amounts of cations such as nickel ions and magnesium ions that could not be completely separated in the nickel extraction step. The nickel ions and magnesium ions are cations like lithium ions, and exhibit the same behavior as lithium ions during the electrodialysis described above, so that it is difficult to separate them from lithium ions. Also, when the electrodialysis is performed on the lithium-containing solution containing the nickel ions and magnesium ions, hydroxides of nickel and magnesium may be generated in the resulting lithium hydroxide solution, and the electrodialysis cannot be continued due to troubles of the steps. Therefore, in such a case, it is desirable to wash the lithium-containing solution to remove cations such as nickel ions and magnesium ions prior to the electrodialysis. The washing can be carried out using an ion exchange resin or a chelate resin, for example.

### (Crystallizing Step)

After the hydroxide step, a crystallization step may be performed to precipitate lithium hydroxide from the lithium hydroxide solution. For example, if a series of steps including the acid leaching step to the nickel extraction step are repeated, the lithium ion concentration in the solution such as the lithium sulfate solution can gradually increase as new lithium ion battery waste is fed into the series of steps. After the lithium ion concentration has increased to some extent, a crystallization step can be performed.

In the crystallizing step, a crystallizing operation such as heat concentration or vacuum distillation can be performed in order to deposit lithium hydroxide. For the heat concentration, a higher temperature during crystallizing leads to faster progression of the process, which is preferable. However, the temperature of the crystallized product after crystallizing can be a temperature of less than 60°C at which water of crystallization is not released. This is because when the water of crystallization is released, it results in anhydrous lithium hydroxide and is deliquescent, and it is, thus, difficult to be handled. The lithium hydroxide obtained in the crystallizing step can be subjected to a pulverization process or the like in order to adjust it to required physical properties.

### [Examples]

Next, tests for confirming the effects of the metal recovery method as described above were conducted, which will be described below. However, the descriptions herein are merely for illustrative and are not intended to be limited.

### (Example 1)

The first and second leaching stages as shown in Fig. 3 were repeated multiple times for the battery powder obtained by processing lithium ion battery waste, and the leached solutions obtained in the first leaching stage of the first, second, and sixth cycles were used as metal-containing solutions. Here, calcium phosphate (Ca₃(PO₄)₂) was added to the acidic leaching solution in the first leaching stage (Stage 1) of each cycle.

Table 1 shows the leaching conditions, the concentration of each substance in the leached solution as the metal-containing solution to be subjected to neutralization, the loss ratio in leaching, and the leaching ratio of aluminum. In Table 1, "P/Al" means a ratio of the amount of phosphorus (mol) in the additive to the aluminum content (mol) in the newly fed battery powder in each cycle. The "Leaching Loss" is a percentage, on a mass basis, of the amount of a given metal in the leached residue obtained in the second leaching stage of that cycle when the content of the given metal in the newly fed battery powder in each cycle is 100%. The "Al Leaching Ratio" is a percentage, on a mass basis, of the amount of aluminum in the leached solution obtained in the first leaching stage of that cycle when the aluminum content in the newly fed battery powder in each cycle is taken as 100%.

Subsequently, neutralization was performed by increasing the pH of each metal-containing solution. No phosphate or calcium ion sources were added in neutralization. Table 2 shows the neutralization conditions, the concentration of each substance in the neutralized solution, the loss ratio in neutralization, and the total loss ratio of leaching and neutralization. The loss ratio in neutralization is expressed as a percentage when the content of a given metal in the leached solution is 100%.

As shown in Table 1, the leaching ratio of aluminum in acid leaching was maintained at a relatively low level. Tables 1 and 2 also show that cobalt and nickel losses were suppressed to some extent. In the processing to the metal-containing solution obtained in the first leaching stage at the sixth cycle, the losses of cobalt and nickel were slightly higher than in the first and second cycles. This would be due to the reduced amount of calcium phosphate added.

### (Example 2)

The procedure was substantially the same as that of Example 1, with the exception that calcium sulfate was added in the first leaching stage of acid leaching and phosphoric acid (H₃PO₄) was added in neutralization. Here, the metal-containing solution obtained in the first leaching stage of the second cycle was subjected to neutralization.

As a result, as shown in Tables 1 and 2, the leaching ratio of aluminum in acid leaching was sufficiently suppressed, and cobalt and nickel losses were also effectively suppressed.

### (Comparative Example 1)

For the same battery powder as in Examples 1 and 2, acid leaching was performed only once (single-stage leaching) instead of repeating multiple leaching stages. Calcium phosphate (Ca₃(PO₄)₂) was added during this acid leaching. In Table 1, the "P/Al" means the ratio of the amount of phosphorus (mol) in the additive to the aluminum content (mol) in the battery powder fed during single-stage leaching. The "Leaching Loss" is the percentage, on a mass basis, of the amount of the metal in the leached residue obtained in the single-stage leaching when the content of a given metal in the battery powder fed during the single-stage leaching is 100%. The "Al Leaching Ratio" is the percentage, on a mass basis, of the amount of aluminum in the leached solution obtained by single-stage leaching when the aluminum content in the battery powder fed during single-stage leaching is 100%.

As a result, as shown in Tables 1 and 2, although the addition of the phosphate ion source in acid leaching reduced the aluminum leaching ratio to some extent, the losses of cobalt and nickel were higher, especially in neutralization, and the overall loss of cobalt and nickel could not be suppressed. The reason for the higher losses of cobalt and nickel would be due to the relatively high oxidation-reduction potential.

### (Comparative Example 2)

The procedure was substantially the same as that of Comparative Example 1, with the exception that a phosphate ion source or a calcium ion source was not added during acid leaching, and the pH during neutralization was changed.

As a result, as shown in Table 1, the phosphate ion source or the calcium ion source was not added during acid leaching, so that the leaching ratio of aluminum was higher. As shown in Table 2, although the pH during neutralization was increased to some extent, the neutralized solution still contained a large amount of aluminum ions.

**[Table 1]**

| | Condition Summary | Leaching Conditions | | | | Leached Solution (stage 1 in case of countercurrent leaching) | | | | | | | Leaching Loss | | Al Leaching Ratio |
|---|---|---|---|---|---|---|---|---|---|---|---|---|---|---|---|
| | | Cycle Number in which metal-containing solution was obtained | P/Al mol/mol | pH | ORP (Ag/AgCl) mV | Co | Ni | Al | Cu | Fe | P | P/Al | Co | Ni | |
| | | | | | | g/L | g/L | g/L | g/L | g/L | g/L | mol/mol | % | % | % |
| Ex. 1 | Countercurrent Multi-Stage (calcium phosphate added in stage 1) + Neutralization (no additive) | 1st Cycle | 1 | Stage 1/Stage 2 = 0.48/1.5 | Stage 1/Stage 2 = -301/95 | 22 | 21 | 10 | < 0.001 | 1.7 | 11 | 1.0 | 0.7 | 2.9 | 76 |
| | | 2nd Cycle | 1 | Stage 1/Stage 2 = 2.6/1.5 | Stage 1/Stage 2 = -140/10 | 18 | 16 | 0.27 | < 0.001 | 0.86 | 4.3 | 14 | 1.1 | 2.6 | 33 |
| | | **6th** Cycle | 0.5 | Stage 1/Stage 2 = 3.0/1.5 | Stage 1/Stage 2 = -55/15 | 10 | 9.4 | 1.0 | < 0.001 | 0.57 | 0.63 | 0.54 | 1.3 | 2.6 | 42 |
| Ex. 2 | Countercurrent Multi-Stage (Ca sulfate added in stage 1) + Neutralization (phosphoric acid added) | 1st Cycle | - | Stage 1/Stage 2 = 3.03/1.6 | Stage 1/Stage 2 = -358/20 | 13 | 11 | 7.8 | < 0.001 | 0.040 | - | - | 0.3 | 1.5 | 93 |
| | | 2nd Cycle | - | Stage 1/Stage 2 = 3.4/1.6 | Stage 1/Stage 2 = -284/20 | 14 | 14 | 2.7 | < 0.001 | 0.025 | 0.068 | 0.02 | 0.4 | 1.9 | 94 |
| Comp. 1 | Single-Stage Leaching (Ca phosphate added) + Neutralization (no additive) | - | 1 | 1 | 4 | 18 | 18 | 3.0 | < 0.001 | 1.3 | 5.0 | 1.5 | 1.0 | 2.8 | 31 |
| Comp. 2 | Single-Stage Leaching (no additive) + Neutralization (no additive) | - | 1 | 1.2 | 32 | 20 | 21 | 14 | 0.17 | 5.3 | - | - | 0.8 | 3.3 | 97 |

**[Table 2]**

| | Extraction | Neutralization Conditions | Neutralized Solution | | | | | Neutralization Loss | | **Total** Loss | |
|---|---|---|---|---|---|---|---|---|---|---|---|
| | Cycle Number in which metal-containing solution was obtained | Final pH | Co | Ni | Al | Fe | P | Co | Ni | Co | Ni |
| | | | g/L | g/L | g/L | g/L | g/L | % | % | % | % |
| Ex. 1 | 1st Cycle | 3.0 | 17 | 16 | 0.41 | 0.79 | 0.71 | 1.1 | 0.8 | 1.8 | 3.6 |
| | 2nd Cycle | 2.9 | 19 | 17 | 0.23 | 0.005 | 3.7 | 0.4 | 0.2 | 1.5 | 2.8 |
| | 6th Cycle | 4.3 | 11 | 9.0 | 0.46 | < 0.001 | 0.016 | 0.7 | 0.6 | 2.0 | 3.2 |
| Ex. 2 | 1st Cycle | - | - | - | - | - | - | - | - | - | - |
| | 2nd Cycle | 3.2 | 15 | 15 | 0.38 | 0.005 | < 0.01 | 0.2 | 0.1 | 0.6 | 2.1 |
| Comp. 1 | - | 3.2 | 15 | 15 | 0.43 | < 0.001 | 1.5 | 1.9 | 1.5 | 2.9 | 4.2 |
| Comp. 2 | - | 4.0 | 15 | 15 | 1.7 | 3.3 | - | 2.3 | 11 | 3.1 | 14 |

As described above, it was found that according to the method for recovering metals described above, cobalt and/or nickel could be effectively leached while suppresing copper leaching, and a low leaching ratio of aluminum could be achieved.

## Claims

1. A method for recovering metals from battery powder resulting from lithium ion battery waste, the battery powder containing at least copper, aluminum, and cobalt and/or nickel, the method comprises:
an acid leaching step of leaching the metals in the battery powder into an acidic leaching solution to obtain a metal-containing solution containing at least aluminum ions and cobalt ions and/or nickel ions; and a neutralization step of increasing a pH of the metal-containing solution to precipitate and remove aluminum ions,
wherein in the acid leaching step, a plurality of leaching stages are repeated multiple times, the plurality of leaching stages comprising: a first leaching stage of leaching the metals in the battery powder into an acidic leaching solution, terminating leaching before copper elution, and separating a leached residue to obtain a leached solution; and a second leaching stage of leaching the metals in the leached residue into an acidic leaching solution, and terminating leaching after copper elution to obtain a leached solution,
wherein the leached solution obtained in the first leaching stage is used as the metal-containing solution, and the leached solution obtained in the final leaching stage among the plurality of leaching stages is used as the acidic leaching solution in the next first leaching stage, and
wherein in the acid leaching step, a phosphate ion source and/or a calcium ion source is included in the acidic leaching solution to precipitate aluminum.

2. The method for recovering metals according to claim 1, wherein leaching in the first leaching stage is terminated before an oxidation-reduction potential (based on silver/silver chloride potential) of the acidic leaching solution is 0 mV or more, and
wherein leaching in the second leaching stage is terminated after the oxidation-reduction potential (based on silver/silver chloride potential) of the acidic leaching solution is 0 mV or more.

3. The method for recovering metals according to claim 1 or 2, wherein in the acid leaching step, a calcium ion source and fluorine are included in the acidic leaching solution.

4. The method for recovering metals according to claim 3, wherein a calcium ion source and/or fluorine is added to the acidic leaching solution separately from the battery powder in the acid leaching step.

5. The method for recovering metals according to claim 3, wherein the battery powder to be subjected to the acid leaching step comprises a calcium ion source and/or fluorine.

6. The method for recovering metals according to claim 1 or 2, wherein a phosphate ion source is added to the acidic leaching solution separately from the battery powder in the acid leaching step.

7. The method for recovering metals according to claim 1 or 2, wherein the battery powder to be subjected to the acid leaching step comprises a phosphate ion source.

8. The method for recovering metals according to claim 7, wherein the phosphate ion source added in the acid leaching step is calcium phosphate.

9. The method for recovering metals according to claim 1 or 2, wherein a phosphate ion source and/or a calcium ion source are added to the acidic leaching solution in the first leaching stage, separately from the battery powder, to precipitate the aluminum.

10. The method for recovering metals according to claim 1 or 2, wherein a pH of the metal-containing solution in the neutralization step is 4.5 or less.

11. The method for recovering metals according to claim 1 or 2, wherein in the neutralization step, a phosphate ion source and/or a calcium ion source are included in the metal-containing solution.

12. The method for recovering metals according to claim 11, wherein one of the phosphate ion source and the calcium ion source is added to the acidic leaching solution in the acid leaching step, and the other of the phosphate ion source and the calcium ion source is added to the metal-containing solution in the neutralization step.

13. The method for recovering metals according to claim 12, wherein the calcium ion source is added to the acidic leaching solution in the acid leaching step and the phosphate ion source is added to the metal-containing solution in the neutralization step
